# EUROPÄISCHE PATENTSCHRIFT

(11) **EP 1 595 741 B1**
(45) Veröffentlichungstag und Bekanntmachung des Hinweises auf die Patenterteilung: **17.06.2009**
(21) Anmeldenummer: 05009164.4
(22) Anmeldetag: 26.04.2005
(51) Int. Cl.: B60Q 1/14

(54) **Kraftfahrzeug mit einem Lichtsensor**
Vehicle with a light sensor
Véhicule automobile avec un capteur de lumière

(30) Priorität: 11.05.2004 DE 102004023114
(43) Veröffentlichungstag der Anmeldung: 16.11.2005
(73) Patentinhaber: GM Global Technology Operations, Inc., Detroit, MI 48265-3000 (US)
(72) Erfinder: Bald, Heiko, 64397 Modautal (DE); Böhme, Aiko, 55218 Ingelheim (DE)
(74) Vertreter: Daniel, Ulrich W.P.

(56) Entgegenhaltungen:
- EP-A- 1 281 571
- DE-B1- 2 245 568
- US-B1- 6 291 812

## Beschreibung

Die Erfindung bezieht sich auf ein Kraftfahrzeug mit einem Lichtsensor zur Steuerung eines Abblendlichts, der mit einem vom Nutzer des Kraftfahrzeuges betätigbaren Verdunkelungselement versehen ist.

Die den nächstliegenden stand der Technik bildende DE 22 45 568 B1 offenbart ein Kraftfahrzeug mit einem Lichtsensor zur Steuerung eines Abblendlichts, der mit einem vom Nutzer des Kraftfahrzeuges betätigbaren Verdunkelungselement versehen ist. Das Verdunklungselement ist mittels eines zugeordneten Verstellmittels von einem Nutzer justierbar.

Zur Erhöhung des Komforts für einen Nutzer eines Kraftfahrzeuges, insbesondere bei Personenkraftwagen in einer gehobenen Klasse, ist es bekannt, ein Abblend- oder Fahrtlicht mit einem Lichtsensor zu steuern. Der Lichtsensor ist an einer nach außen weisenden Stelle der Kraftfahrzeugkarosserie angeordnet und erfasst mit einem beliebigen Messprinzip die einfallende Lichtmenge. Sobald diese Lichtmenge einen vorzugsweise einstellbaren Grenzwert unterschreitet, wird vom Lichtsensor, bzw. von einem Steuergerät, das alle Funktionen des Kraftfahrzeuges steuert und das Signal des Lichtsensors erfasst, das Abblend- oder Fahrtlicht des Kraftfahrzeuges eingeschaltet. Dabei ist der Lichtsensor derart ausgelegt, dass er bei beginnender Dämmerung und/oder bei Einfahrt des Kraftfahrzeuges in einen verdunkelten Streckenabschnitt, wie eine Tiefgarage oder einen Tunnel, das Abblendlicht selbsttätig anschaltet und beispielsweise bei Verlassen des Tunnels oder der Tiefgarage das Licht selbsttätig wieder ausschaltet, um eine Blendung entgegenkommender Verkehrsteilnehmer durch das Abblendlicht zu vermeiden.

Darüber hinaus kann vom Nutzer in bekannter Weise durch Betätigen eines Lichtschalters, der an einer geeigneten Stelle am Armaturenbrett des Kraftfahrzeuges angeordnet ist, auch bei Tageslicht oder in sonstigen Situationen, wenn dies von ihm gewünscht ist, das Abblendlicht eingeschaltet werden und zwar unabhängig davon, ob der Lichtsensor eine verringerte Helligkeit registriert oder nicht. Dies kann beispielsweise in skandinavischen Ländern notwendig sein, in denen das Abblendlicht auch am Tage eingeschaltet sein muss.

Als nachteilig hierbei ist jedoch anzusehen, dass der Schalter zum Betätigen des Abblendlichts gegenüber einem konventionellen Schalter ohne einen Lichtsensor relativ aufwendig gestaltet sein muss, da er neben den beiden bekannten Stellungen für "Licht an" und "Licht aus" noch eine dritte Stellung "Auto" für den automatischen Betrieb des Abblendlichts mit dem Lichtsensor aufweisen muss. Durch die zusätzliche Schalterstellung sind Fehlbedienungen des Lichtschalters durch einen unaufmerksamen Nutzer des Kraftfahrzeuges nicht auszuschließen, wodurch es trotz des vorhandenen Lichtsensors zu einem unbeabsichtigten Ausschalten des Abblendlichts kommen kann und eine potentiell gefährliche Verkehrssituation entsteht.

Es ist Aufgabe der Erfindung, ein Kraftfahrzeug mit einem Lichtsensor der eingangs genannten Art zu schaffen, bei dem kein konventioneller Lichtschalter zum manuellen Ein- und Ausschalten des Abblendlichts vorgesehen ist.

Erfindungsgemäß wird die Aufgabe dadurch gelöst, dass das Verdunkelungselement elektromotorisch betätigbar ist oder eine elektrophoretische Schicht umfasst und ein Betätigungselement für das Verdunkelungselement an einem Armaturenbrett des Kraftfahrzeuges angeordnet ist.

Der Kerngedanke der Erfindung besteht darin, dass der Lichtsensor gegebenenfalls über ein im Kraftfahrzeug vorhandenes zentrales Steuergerät stets das Abblendlicht des Kraftfahrzeuges im selbsttätigen automatischen Betrieb steuert. Das bedeutet, dass auf einen konventionellen Lichtschalter zum manuellen Ein- und Ausschalten des Abblendlichts sowie zur Auswahl des selbsttätigen Betriebs vollständig verzichtet wird und der Lichtsensor stets im automatischen Betrieb mit dem Abblendlicht gekoppelt ist. Falls der Nutzer des Kraftfahrzeuges es trotz eines hellen Umgebungslichtes wünscht, das Abblendlicht des Kraftfahrzeuges einzuschalten, kann, obwohl der Lichtsensor noch ausreichende Helligkeit registriert, der Nutzer den Lichteinfall auf den Lichtsensor mit dem dem Lichtsensor zugeordneten Verdunkelungselement unterbinden. Somit wird dem Lichtsensor eine verringerte Umgebungshelligkeit vermittelt, wodurch er selbsttätig das Abblendlicht einschaltet. Im Rahmen der Erfindung kann das Verdunkelungselement in beliebiger Weise ausgestaltet sein und bevorzugt wie im Folgenden beschrieben.

Der Vorteil der Erfindung liegt darin, dass eine Fehlbedingung eines Lichtschalters im Armaturenbrett, der, wie vorstehend ausgeführt, drei unterschiedliche Schaltstellungen aufweist, durch den Nutzer des Kraftfahrzeuges vermieden wird, da dieser Lichtschalter nicht mehr vorhanden ist. Vielmehr wird das Abblendlicht dauerhaft im selbsttätigen Betrieb von dem Lichtsensor angesteuert. Somit entfällt ein mit Kosten verbundener Lichtschalter und die Bedienung des Kraftfahrzeuges ist vereinfacht. Da Fehlbedienungen ausgeschlossen sind, ist die Verkehrssicherheit erhöht.

Zur Betätigung des Verdunkelungselementes ist dieses elektrisch von der nicht abdeckenden Stellung in die den Lichtsensor abdeckenden Stellung verbringbar und umgekehrt. Eine Betätigung kann mit einem Hebel erfolgen, der vom Nutzer des Kraftfahrzeuges betätigbar ist und über einen geeigneten Hebelmechanismus auf das Verdunkelungselement einwirkt. Eine elektromotorische Betätigung erfolgt bevorzugt über einen Stellmotor, der beispielsweise eine Klappe oder einen Schieber betätigt, wobei der Elektromotor vorzugsweise über das an dem Armaturenbrett angeordnet Betätigungselement vom Nutzer des Kraftfahrzeuges ansteuerbar ist, um den Lichtsensor zu verdunkeln oder das Tageslicht ungestört in den Lichtsensor einfallen zu lassen. Das Betätigungselement ist vorzugsweise derart angeordnet, dass eine unbeabsichtigte Fehlbedienung durch den Nutzer des Kraftfahrzeuges ausgeschlossen ist, d. h. der Nutzer muss zum Betätigen des Betätigungselements, wie einem Druckknopf oder einem Hebel, die Hand bewusst vom Lenkkrad nehmen, um das Betätigungselement zu erreichen.

In einer alternativen Ausgestaltung umfasst das Verdunkelungselement die elektrophoretische Schicht. Beispielsweise kann an einer Glas- oder Kunststoffscheibe, durch die hindurch Licht von außen in den Lichtsensor einfällt, eine dem Fachmann bekannte elektrophoretische Schicht angeordnet sein, die bei Anlegen einer elektrischen Spannung ihre Transparenz beispielsweise von "durchsichtig" auf "undurchsichtig" ändert. Das Anlegen der notwendigen Spannung kann ebenfalls vom Nutzer durch Betätigen eines Druckknopfs ausgeführt werden.

In Ausgestaltung der Erfindung ist das Verdunkelungselement als Schieber oder Klappe, beispielsweise als Kunststoff-Spritzgussteil, ausgebildet, der bzw. die zur Unterbindung des Lichteinfalls in den Lichtsensor von einer den Lichtsensor nicht abdeckenden Stellung in eine den Lichtsensor abdeckenden Stellung verbringbar ist und umgekehrt. Dabei kann der Schieber eine translatorische Bewegung ausführen und eine Klappe um eine Schwenkachse verdreht bzw. auf einer Kreisbahn verschwenkt werden, um den Lichtsensor zu beaufschlagen.

Bei einer alternativen Ausführung ist das Verdunkelungselement in Form mehrerer zueinander paralleler und um jeweils parallel ausgerichtete Drehachsen verschwenkbarer Lamellen aus Kunststoff oder Metall ausgebildet, die vor dem Lichtsensor angeordnet sind. Im geöffneten Zustand der Lamellen lassen diese das Licht im Wesentlichen ungehindert auf den Lichtsensor einfallen. Werden die Lamellen verschwenkt, ist der Lichtsensor abgedunkelt und das Abblendlicht wird selbsttätig eingeschaltet.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

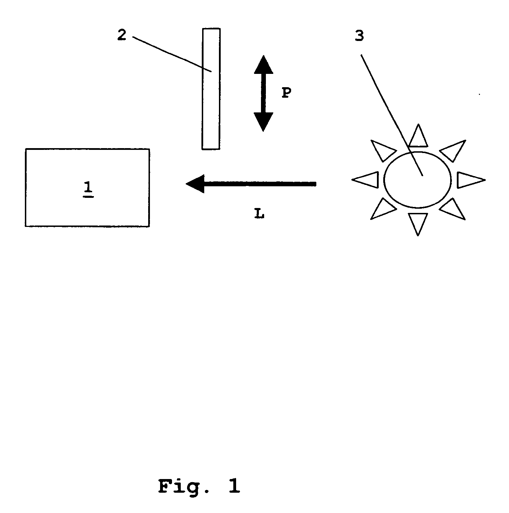

Die Erfindung wird im Folgenden anhand eines Ausführungsbeispiels unter Bezugnahme auf die zugehörige Zeichnung näher erläutert. Die einzige Fig. der Zeichnung zeigt eine schematische Darstellung eines Lichtsensors in einem Kraftfahrzeug nach der Erfindung.

Der Lichtsensor 1 registriert mit einem beliebigen Messprinzip die Menge des durch den Pfeil L angedeuteten einfallenden Lichts. Ein entsprechendes Signal des Lichtsensors 1 kann über in der Kraftfahrzeugtechnik bekannte Datenbus-Architekturen an ein zentrales Steuergerät im Kraftfahrzeug weitergeleitet und ausgewertet werden. Um eine Fehlbedienung eines Abblendlichts des Kraftfahrzeuges auszuschließen, wird auf einen herkömmlichen Lichtschalter zum Ein- und Ausschalten des Abblendlichts verzichtet und das Abblendlicht dauernd im automatischen Betrieb von dem Lichtsensor 1 gesteuert.

Möchte der Nutzer des Kraftfahrzeuges trotz ausreichender Umgebungshelligkeit das Abblendlicht einschalten, so steuert er ein Verdunkelungselement 2 an, um den von der Sonne 3 gemäß Pfeil L ausgehenden Lichteinfall in den Lichtsensor 1 zu unterbinden. Somit wird dem Lichtsensor 1 eine verringerte Umgebungshelligkeit vorgetäuscht und das Abblendlicht automatisch eingeschaltet.

Das Verdunkelungselement 2 ist in Form eines elektromotorisch betätigbaren Schiebers ausgeführt, der, wie durch den Pfeil P angedeutet, translatorisch von einer den Lichtsensor 1 nicht abdeckenden Position in eine abdeckende Position und wieder zurück verbringbar ist. Ebenso kann das Verdunkelungselement 2 auch als verschwenkbare Klappe, in Form von Lammellen oder als elektrophoretische Schicht ausgeführt sein.

### Bezugszeichenliste

- 1.: Lichtsensor
- 2.: Verdunkelungselement
- 3.: Sonne
- P: Pfeil
- L: Pfeil

## Patentansprüche

1. Kraftfahrzeug mit einem Lichtsensor (1) zur Steuerung eines Abblendlichts, der mit einem vom Nutzer des Kraftfahrzeuges betätigbaren Verdunkelungselement (2) versehen ist, **dadurch gekennzeichnet, dass** das Verdunkelungselement (2) elektromotorisch betätigbar ist oder eine elektrophoretische Schicht umfasst und ein Betätigungselement für das Verdunkelungselement (2) an einem Armaturenbrett des Kraftfahrzeuges angeordnet ist.

2. Kraftfahrzeug nach Anspruch 1, **dadurch gekennzeichnet, dass** das Verdunkelungselement (2) ein Schieber oder eine Klappe ist.

3. Kraftfahrzeug nach Anspruch 1, **dadurch gekennzeichnet, dass** das Verdunkelungselement (2) verschwenkbare Lammellen aufweist.

## Claims

1. Motor vehicle with a light sensor (1) for controlling a low beam which is provided with a dimmer element (2) which can be operated by the driver of the vehicle, **characterized in that** the dimmer element (2) can be operated by an electric motor or comprises an electrophoretic layer and an actuating element for the dimmer element (2) is situated on the motor vehicle dashboard.

2. Motor vehicle according to claim 1, **characterized in that** the dimmer element (2) is a slider or a flap.

3. Motor vehicle according to claim 1, **characterized in that that** the dimmer element (2) comprises displaceable lamellae.

## Revendications

1. Véhicule automobile avec un capteur de lumière (1), pour la commande d'un feu de croisement, qui comprend un élément à effet d'ombrage (2) mis en action par l'utilisateur du véhicule, **caractérisé en ce que**, l'élément à effet d'ombrage (2) est mis en action de façon électromotorisée ou bien comprend une couche électrophorétique, et un élément de commande est monté pour l'élément à effet d'ombrage (2) au tableau de bord du véhicule.

2. Véhicule automobile d'après revendication 1, **caractérisé en ce que** l'élément à effet d'ombrage (2) est une vanne ou un clapet.

3. Véhicule automobile d'après revendication 1, **caractérisé en ce que** l'élément à effet d'ombrage (2) présente des lamelles pouvant être amenées à pivoter.
